# FASCICULE DE BREVET EUROPEEN

(11) **EP 2 859 990 B1**
(45) Date de publication et mention de la délivrance du brevet: **24.08.2016**
(21) Numéro de dépôt: 14187897.5
(22) Date de dépôt: 07.10.2014
(51) Int. Cl.: B23Q 1/62, B23Q 9/00, B62D 57/024

(54) **Machine-outil comportant un rail longitudinal et un bras transversal**
Werkzeugmaschine, die eine Längsschiene und einen Querarm umfasst
Machine-tool comprising a longitudinal rail and a transverse arm

(30) Priorité: 08.10.2013 FR 1359747
(43) Date de publication de la demande: 15.04.2015
(73) Titulaire: Airbus Operations, 31060 Toulouse (FR)
(72) Inventeur: Albert, Fabien, 31000 Toulouse (FR)
(74) Mandataire: Santarelli

(56) Documents cités:
- EP-A1- 1 761 360
- DE-A1- 10 318 490
- US-A- 3 226 027
- US-A1- 2004 265 076
- US-A1- 2012 014 759

## Description

La présente invention concerne une machine-outil pour la réalisation d'opérations à la surface d'une pièce, notamment de grandes dimensions, par exemple la réalisation de perçages sur un élément de fuselage d'aéronef.

Elle porte plus généralement sur le domaine des machines-outils employées pour réaliser des opérations automatisées ou semi-automatisées, typiquement des opérations d'usinage ou de montage, sur des pièces ou des structures de grandes dimensions.

La fabrication des fuselages d'avion ou d'autres structures aéronautiques telles que des ailes est réalisée de manière connue par l'assemblage de panneaux rigides, généralement métalliques, sur une structure. Pour cela, les panneaux, plans ou courbes, sont mis en position sur la structure et assemblés à celle-ci par exemple par rivetage. Cela nécessite de pouvoir usiner l'ensemble une fois les panneaux en position, typiquement afin de réaliser les perçages nécessaires au rivetage.

Ces opérations sont réalisables par un opérateur. Le développement de robots de grandes dimensions susceptibles de réaliser les perçages sur la totalité d'un fuselage est onéreux.

Afin de réaliser ces perçages ou d'autres opérations d'usinage simples sur des ensembles de grandes dimensions, de manière rapide et avec précision, des dispositifs ont néanmoins été développés afin d'automatiser en partie ces opérations.

Par exemple, le document EP1761360 présente une machine-outil comportant deux rails flexibles parallèles fixés sur la structure à usiner. La fixation des rails sur la structure est réalisée à l'aide de ventouses. Un moyen d'usinage, typiquement une perceuse, se déplace entre les deux rails, le long d'un module transversal.

Un tel dispositif est cependant compliqué à mettre en oeuvre, en ce qu'il comporte deux rails devant être parfaitement parallèles. En outre, par construction, la largeur entre les deux rails, et la surface pouvant être atteinte par l'outil d'usinage, sont limités. Enfin, un tel dispositif n'est pas adapté à une surface présentant une double courbure importante, du fait de la difficulté à positionner deux rails parallèles sur une telle surface. Une double courbure prononcée est présente dans certaines zones des structures aéronautiques et notamment de certains fuselages.

US-2012/0014759-A montre une machine-outil selon le préambule de la revendication 1, avec une unité comportant des ventouses.

La présente invention a pour but de résoudre au moins l'un des inconvénients précités.

A cette fin, l'invention porte sur une machine-outil pour la réalisation d'opérations sur une pièce comportant :
- un rail longitudinal configuré pour être positionné vis-à-vis de la pièce ;
- un bras transversal, orthogonal au rail longitudinal, comportant une première extrémité montée en translation sur rail longitudinal ;
- un outil porté par le bras transversal ;
dans laquelle une seconde extrémité du bras transversal est pourvue d'une unité comportant un moyen de maintien permettant le maintien en position de l'unité sur la pièce et dans laquelle l'unité est motorisée et comporte un système de déplacement pour ramper sur la pièce, parallèlement au rail longitudinal.

L'unité est dans ce cas maintenue en permanence en contact avec la pièce.

La machine-outil comporte un rail longitudinal unique. Le rail peut être positionné fixement vis-à-vis de la pièce. Une telle machine-outil est simple à mettre en oeuvre car nécessitant la mise en position d'un seul rail. Elle peut être adaptée à la réalisation d'opérations sur une pièce présentant une surface à double courbure, car elle ne nécessite pas la mise en position de deux rails parallèles. Elle est adaptée aux structures de grandes dimensions, et permet des opérations sur une grande surface. En effet, un bras transversal d'une longueur importante, par exemple de l'ordre de 1200m, peut être mis en oeuvre. Le bon maintien du bras transversal est garanti par la fixation ou le contrôle permanent en position de ses deux extrémités, respectivement sur le rail longitudinal d'une part et sur la pièce par une ventouse d'autre part, lors d'une opération réalisée sur la pièce.

Selon un mode de réalisation, le moyen de maintien comporte une ventouse.

Selon d'autres modes de réalisation, le moyen de maintien comporte un dispositif choisi parmi : un dispositif magnétique, une courroie autocollante, un dispositif générant des forces de Van der Walls.

Selon une première variante, l'unité peut comporter une chenille. Cette chenille peut comporter une bande de roulement comportant une pluralité de ventouses.

Selon une seconde variante, l'unité peut comporter une roulette motorisée.

Dans ce mode de réalisation, la machine-outil peut comporter un dispositif de commande, arrangé de sorte à synchroniser le mouvement de l'unité au mouvement de la première extrémité du bras transversal le long du rail longitudinal. La machine-outil peut alors comporter des moyens de détermination des efforts générés par le bras transversal sur le rail longitudinal, lesdits moyens de détermination des efforts étant fonctionnellement liés au dispositif de commande, et le dispositif de commande étant configuré pour minimiser lesdits efforts.

L'outil peut être conformé pour pouvoir se déplacer en translation le long du bras transversal. L'outil peut notamment être choisi parmi : une perceuse, une meuleuse, une sonde tribologique, un dispositif d'insertion de rivet, un dispositif de rivetage, un pistolet à mastic, un pistolet peinture.

Le montage en translation du bras transversal sur le rail longitudinal est avantageusement réalisé par un module lié rigidement au bras transversal et monté en translation sur le rail longitudinal.

Le rail longitudinal peut être flexible, de sorte à pourvoir s'adapter à un rayon de courbure de la pièce.

La fixation du rail longitudinal sur la pièce est avantageusement réalisée à l'aide de ventouses de fixation. A cette fin, le rail longitudinal comporte avantageusement des ventouses de fixation.

D'autres particularités et avantages de l'invention apparaîtront encore dans la description ci-après.

Aux dessins annexés, donnés à titre d'exemples non limitatifs :
- la figure 1, présente schématiquement une machine-outil selon un mode de réalisation de l'invention, ainsi que son environnement immédiat ;
- la figure 2 présente une vue de détail d'une unité de bras transversal telle que mise en oeuvre dans un mode de réalisation de l'invention, selon une vue schématique en trois dimensions.

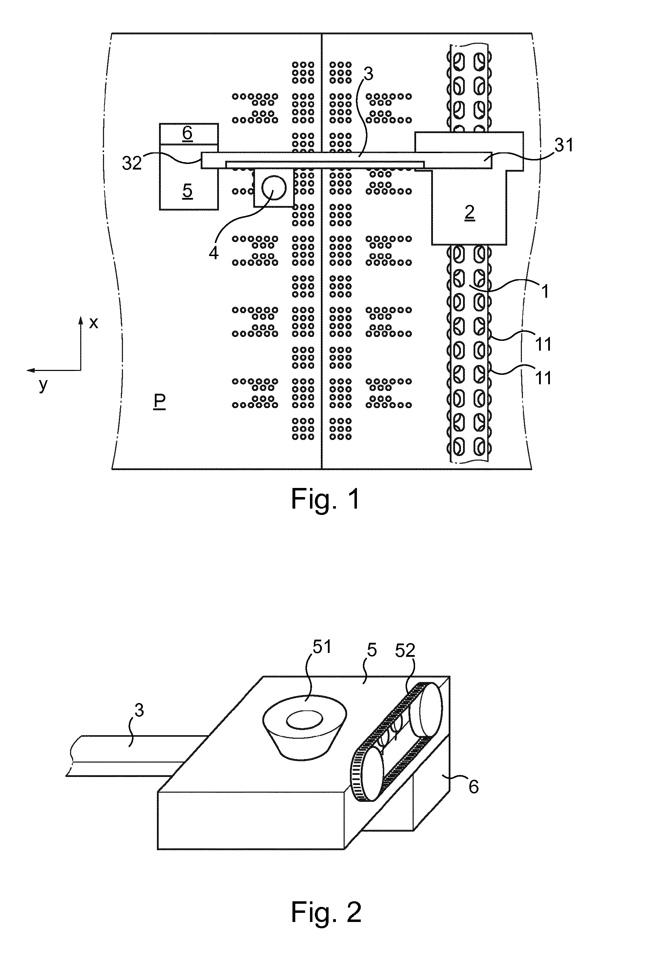

Une machine-outil conforme au mode de réalisation de l'invention représenté en figure 1 comporte un rail longitudinal 1. Dans ce mode de réalisation, le rail longitudinal 1 comporte des ventouses de fixation 11, permettant d'en assurer la fixation sur la pièce P sur laquelle des opérations par exemple d'usinage sont à mener. Ici, le rail longitudinal 1 est flexible et peut ainsi suivre la courbure de la pièce P. Un module 2 est monté sur le rail longitudinal 1 et peut se déplacer en translation sur ce dernier. Le module 2 peut être équipé d'un ou plusieurs moteurs entraînant sa translation sur le rail longitudinal 1.

Un bras transversal 3 est fixé au module 2, au niveau d'une première extrémité 31 du bras transversal 3. Le bras transversal 3 est, et reste, sensiblement orthogonal au rail longitudinal 1. Le bras transversal 3 peut se déplacer en translation le long du rail longitudinal 1. Dans l'exemple ici représenté, cette translation est directement liée à la translation du module 2 le long du rail longitudinal 1. Le module 2 peut être conformé afin de recevoir une unité de puissance, non représentée, contenant l'électronique de puissance des dispositifs mis en jeu dans la machine-outil. Dans une application aéronautique, le bras transversal peut présenter une longueur autorisant des usinages sur 1200mm environ.

Un outil 4, typiquement un outil d'usinage, est lié au bras transversal 3. L'outil 4 peut comporter en pratique un module qui se connecte au bras transversal 3 via une interface, ce module contenant un outil de travail. Le module contenant l'outil de travail sert ainsi à assurer la liaison mécanique au bras, à apporter les énergies nécessaires au fonctionnement de l'outil de travail, et à en assurer la fonctionnalité grâce à divers périphériques tels que des vérins, des capteurs, etc. L'outil est conformé pour se déplacer en translation le long du bras transversal 3. L'outil 4 est donc en liaison glissière avec le bras transversal 3. L'outil 4 peut notamment être un moyen d'usinage à proprement parler ou un moyen d'usinage fixé à un support lui-même lié au bras transversal 3.

L'outil 4 pourra notamment être une perceuse, ou un outil de perçage appelé « unité de perçage automatique ». Il peut également s'agir à titre d'exemples et de manière non exhaustive d'un outil de découpage, de meulage, de contrôle dimensionnel, de contrôle non destructif par exemple à ultra-sons, de détection de trous borgnes, d'application de mastic, d'application de colle, d'application de peinture.

La translation de l'outil 4 le long du bras transversal 4 peut être motorisée.

Les moteurs entraînant le mouvement du module 2 le long du rail longitudinal et/ou celui de l'outil 4 le long du bras transversal 3 peuvent être du type « pas à pas ». Ils sont avantageusement associés à un système de commande électronique (non représenté) permettant d'en assurer le contrôle en position.

Ainsi, la position de l'outil peut être très précisément contrôlée dans un repère orthogonal ayant un axe parallèle au rail longitudinal (position dite en « x ») et un axe parallèle au bras transversal (position dite en « y »).

Tout autre dispositif par ailleurs connu dans l'état de la technique permettant de piloter et contrôler la position de l'outil selon ces deux axes peut également être employé.

L'outil peut également, selon diverses variantes de l'invention, être piloté en orientation selon trois axes de rotation orthogonaux, ou selon l'un, ou deux, de ces trois axes.

Le bras transversal 3 de la machine-outil comporte une unité 5. L'unité 5 est fixée à une seconde extrémité 32 du bras transversal 4. La figure 2 en présente un mode de réalisation particulier, selon une vue schématique en trois dimensions. Dans ce mode de réalisation, l'unité 5 comporte une ventouse 51. La ventouse 51 permet le maintien en position de l'unité 5 vis-à-vis de la pièce P, lors d'une opération sur la pièce P pouvant générer des efforts dans le bras transversal 3. A la figure 2, la face visible de l'unité 5 portant la ventouse 51 correspond donc à la face destinée à être en regard de la pièce P. La ventouse 51 est alimentée en vide par des moyens de génération de vide, ou centrale de génération de vide, et un circuit d'alimentation en vide (non représentés). Les moyens de génération de vide peuvent être communs à l'alimentation de la ventouse 51 et aux ventouses de fixation 11.

La ventouse 51 peut être fixe, ou être rétractable en totalité ou en partie dans l'unité 5, de sorte à être éloignée de la pièce P lors de son mouvement. La ventouse 51 est dans ce cas mise en contact avec la pièce P, puis une dépression est appliquée dans la ventouse afin de l'immobiliser sur la pièce P.

L'unité 5 peut comporter plusieurs ventouses 51.

Dans le mode de réalisation de l'invention ici illustré, l'unité 5 est motorisée. La motorisation de l'unité 5 permet de piloter son déplacement sur la pièce P, parallèlement au rail longitudinal 1. L'unité 5 comporte une chenille 52 en tant que système de déplacement. L'unité 5 ainsi motorisée est adaptée pour ramper sur la pièce P parallèlement au rail longitudinal 1.

Un dispositif ainsi constitué pour se mouvoir lentement ou ramper sur une surface est communément désigné par le terme « chenillard » ou le terme anglophone « crawler ».

La chenille 52 comporte une bande de caoutchouc offrant un bon coefficient de frottement sur la pièce.

Le mouvement de l'unité 5, dans les modes de réalisation dans lesquels elle est motorisée et conformée pour ramper sur la pièce parallèlement au rail longitudinal, tel que dans le mode de réalisation ici représenté, est avantageusement contrôlé par un dispositif de commande 6. Le dispositif de commande est, dans la variante de l'invention ici représentée, lié à l'unité 5.

Le dispositif de commande 6 vise à synchroniser le mouvement de l'unité 5 à celui du module 2 le long du rail longitudinal 1.

Sur une surface plane, le mouvement de l'unité 5 doit être identique à tout instant à celui du module 2 le long du rail longitudinal 1, afin d'assurer un déplacement identique et simultané de ces éléments. A contrario, lors d'une utilisation de la machine-outil sur une surface présentant une double courbure, par exemple à l'avant du fuselage d'un aéronef, la vitesse de l'unité 5 doit être différente de la vitesse du module 2 afin d'assurer que l'unité 5 et le module 2 se déplacent de manière synchronisée, bien que la distance à parcourir par l'unité 5 et le module 2 soit différente. Le dispositif de commande 6 permet une telle gestion des déplacements de l'unité 5 et du module 2.

En outre, la synchronisation du mouvement de l'unité 5 et du module 2 le long du rail longitudinal 1 permet un positionnement plus précis du bras transversal 3. En effet, le montage en porte à faux vis-à-vis de sa fixation au rail longitudinal 1 du bras transversal 3, ainsi que la masse de l'outil 4 et sa position sur le bras transversal 3 peuvent entraîner une légère flexion du bras transversal 3.

Enfin, le montage en porte à faux du bras transversal 3, la masse et la position de l'outil 4 génèrent des efforts potentiellement important dans la liaison entre le bras transversal 4 et le rail longitudinal 1, qu'il convient de limiter par une bonne synchronisation du mouvement de l'unité 5 et du module 2. A cette fin, la machine-outil peut être dotée de moyens de détermination des efforts générés par le bras transversal au niveau de sa liaison avec le rail longitudinal. Il peut typiquement s'agir de capteurs ou de jauges de contraintes, permettant la détermination du couple dans la liaison entre le rail longitudinal 1 et le bras transversal 3, lié au montage de ce dernier en porte à faux.

Les moyens de détermination des efforts sont fonctionnellement liés au dispositif de commande. Le dispositif de commande reçoit donc les mesures des capteurs, et, en fonction de ces mesures et/ou de leur interprétation, commande le mouvement de l'unité 5, par sa motorisation, de sorte à minimiser les efforts générés par le bras transversal au niveau de sa liaison avec le rail longitudinal.

D'une manière générale, la machine-outil peut comporter un ensemble de moyens de contrôle géométriques (non illustrés) permettant d'identifier les déformations (flexions, torsions) susceptibles d'affecter la précision du positionnement de l'outil 4, et de corriger ce positionnement via une boucle de correction.

Dans le cas d'une machine-outil comprenant une unité 5 non motorisée, le dispositif de commande permettant d'assurer le contrôle en position du module 2 le long du rail longitudinal 1 et/ou celui de l'outil 4 le long du bras transversal 3 peut être configuré pour tenir compte des déformations de la machine-outil générées par le montage et porte à faux du bras transversal 3, la masse et la position de l'outil 4. Dans le cas d'une machine-outil comprenant une unité 5 non motorisée, l'unité 5 est mue à faible distance de la surface de la pièce P, lors du mouvement du bras transversal 3.

Bien évidemment, d'autres modes de réalisation ou variantes de la machine-outil peuvent être envisagés sans sortir du cadre de l'invention.

En particulier, d'autres moyens de fixation du rail longitudinal 1 sur la pièce P peuvent être employés, par exemple des moyens magnétiques.

Dans une autre variante de l'invention, le rail longitudinal 1 ne comporte pas de moyens de fixation directe sur la pièce à usiner. Dans cette variante, le rail longitudinal 1 n'est pas posé sur la pièce P ou en contact avec cette dernière, mais fait partie d'une installation environnante ou « poste de travail ». Le rail longitudinal 1 est alors positionné fixement vis-à-vis de la pièce, par immobilisation de la pièce P par rapport au poste de travail.

Le moyen de maintien de l'unité 5 peut comporter une ventouse ou une pluralité de ventouse, alimentées ou non en dépression. En alternative ou complément aux ventouses, il peut comporter un dispositif choisi parmi : un dispositif magnétique, une courroie autocollante, un dispositif générant des forces de Van der Walls.

En alternative à la chenille à bande caoutchouteuse précédemment décrite, le système de déplacement d'une unité 5 motorisée peut comporter une chenille du type à ventouses, c'est-à-dire constituée d'une bande comportant des ventouses, assurant un bon contact entre l'unité 5 et la pièce P lors du mouvement de l'unité 5 et du bras transversal 3. Dans cette variante, les ventouses de la bande peuvent être passives, et se coller à la surface de la pièce P au fur et à mesure du mouvement sous le seul effet de l'effort de plaquage de l'unité 5 sur la pièce P. Les ventouses de la bande peuvent alternativement être actives, alimentées en vide lorsqu'elles sont en contact avec la pièce P par les moyens de génération de vide. De telles ventouses peuvent être employées en tant que moyen de maintien de l'unité 5 lors de l'usinage de la pièce P, sans qu'une ventouse supplémentaire ne soit nécessaire pour cette fonction.

Alternativement, d'autres systèmes de déplacement peuvent être employés. Par exemple, dans une variante, une ou plusieurs roulettes motorisées sont mises en oeuvre. Préférentiellement, la ou les roulettes comportent une bande de roulement en matière caoutchouteuse. Selon d'autres exemples de variantes, le système de déplacement comporte un coussin d'air, un dispositif magnétique, ou une courroie autocollante.

Dans le cas d'une machine-outil dont l'unité 5 est motorisée, le dispositif de commande 6 peut présenter diverses localisations et caractéristiques. Le dispositif de commande 6, en alternative à une position liée à l'unité 5, peut être porté par le module 2, ou par tout autre élément de la machine-outil. Il peut être extérieur à la machine-outil. Le dispositif de commande 6 peut également employer les même moyens physiques (calculateurs, etc.) que les moyens commandant le déplacement du module 2 sur le rail longitudinal 1. Enfin, les données de commandes issues du dispositif de commande peuvent être transmises à l'unité 5 par des moyens filaires ou sans fil.

Une machine-outil telle que décrite précédemment peut être utilisée par exemple pour le perçage des trous de rivetage d'une partie de fuselage d'un aéronef. Le procédé de perçage peut se dérouler selon les étapes ci-après décrites. Tout d'abord, le rail longitudinal 1 est positionné selon un positionnement prédéfini sur la partie de fuselage. Le module 2 est positionné en « x », c'est-à-dire le long du rail longitudinal 1, selon une première position prédéfinie. Dans un mode de réalisation de l'invention dans lequel elle est motorisée, l'unité 5 rampe le long de la partie de fuselage, parallèlement au rail longitudinal 1, de manière synchronisée vis-à-vis du module 2. Une fois le module 2 et l'unité 5 positionnés, le moyen de maintien de l'unité 5 est mis en oeuvre de sorte à immobiliser l'unité 5 vis-à-vis de la partie de fuselage. Typiquement, lorsque me moyen de maintien de la machine-outil mise en oeuvre comporte une ventouse 51, la ventouse 51 est mise en contact avec la partie de fuselage, et une dépression est établie dans la ventouse 51 de sorte à immobiliser l'unité 5. L'unité 5 est alors maintenue en position par la dépression générée dans la ventouse 51. L'unité 5, alors rigidement liée à la seconde extrémité 32 du bras transversal 3, constitue un ancrage stable sur la pièce P pour la seconde extrémité 32 du bras transversal 3. La première extrémité 31 du bras transversal est quant à elle immobilisée sur le rail longitudinal 1. Ainsi, le bras transversal 3 est totalement immobilisé et offre une structure d'appui stable pour l'outil 4, lors de l'opération sur la pièce P.

L'outil 4, qui dans le cas ici décrit est une unité de perçage autonome, est positionné le long du bras transversal 3, en « y » de sorte à réaliser un premier perçage en un point précis prédéterminé de la partie de fuselage.

Le moyen de maintien est ensuite relâché, par exemple la dépression dans la ventouse 51 est relâchée, de sorte que l'unité 5 est de nouveau mobile vis-à-vis de la partie de fuselage.

L'outil est ensuite positionné de sorte à réaliser un deuxième perçage en un deuxième point de la partie de fuselage. L'outil peut être déplacé ou recalé en « x » par déplacement du module 2 le long du rail longitudinal 1 tandis que l'unité 5 motorisée rampe à la surface de la partie de fuselage selon un déplacement synchronisé, et déplacé en « y » le long du bras transversal 3.

Tel que précédemment décrit, le moyen de maintien est mis en oeuvre et le bras transversal 3 immobilisé, puis le deuxième perçage réalisé.

Le module 2 est déplacé en une deuxième position prédéfinie le long du rail longitudinal 1. Une fois le module 2 et l'unité 5 correctement positionnés, la ventouse 51 est employée pour immobiliser l'unité 5 vis-à-vis de la partie de fuselage. Une deuxième ligne de perçage peut alors être réalisée.

Les perçages prévus dans la zone pouvant être atteinte par la machine-outil peuvent ainsi être réalisés avant déplacement de la machine-outil pour la réalisation des perçages dans une autre zone.

D'autres opérations peuvent être réalisées à l'aide d'une machine-outil objet de l'invention. Certaines opérations, comme une découpe ou un fraisage peuvent nécessiter une mobilisation constante de l'outil selon les deux axes « x » et « y ». Cela est réalisé par une mobilisation simultanée du module 2 le long du rail longitudinal 1, de l'outil 4 le long du bras transversal 3, et, le cas échéant, de l'unité 5 si cette dernière est motorisée.

La machine-outil ainsi développée permet la réalisation d'opérations automatisées ou semi-automatisées, notamment des opérations d'usinages simples, à la surface d'une pièce de grandes dimensions pouvant typiquement être un élément de fuselage d'aéronef. Un seul rail étant à positionner en tant que référence longitudinale sur la pièce, la machine-outil développée peut être adaptée, selon le mode de réalisation considéré, aux structures présentant une double courbure. Elle est en outre facile à installer, de sorte que, typiquement, un seul opérateur peut suffire à sa mise en oeuvre. Elle permet la réalisation d'opérations, par exemple d'usinage, sur une surface importante grâce à une grande longueur de bras. Cela est rendu possible par l'immobilisation ou le contrôle permanent en position des deux extrémités du bras lors des opérations réalisées sur la pièce. La machine-outil développée est en outre facilement reconfigurable, et peut accueillir de nombreux type d'outils permettant de nombreux types d'usinages, assemblage, ou contrôles.

## Revendications

1. Machine-outil pour la réalisation d'opérations sur une pièce comportant :
• un rail longitudinal (1) configuré pour être positionné vis-à-vis de la pièce ;
• un bras transversal (3), orthogonal au rail longitudinal (1), comportant une première extrémité (31) montée en translation sur le rail longitudinal (1) ;
• un outil porté par le bras transversal ;
dans laquelle une seconde extrémité (32) du bras transversal (3) est pourvue d'une unité (5) comportant un moyen de maintien permettant le maintien en position de l'unité (5) sur la pièce,
**caractérisée en ce que** l'unité (5) est motorisée et comporte un système de déplacement pour ramper sur la pièce, parallèlement au rail longitudinal (1).

2. Machine-outil selon la revendication 1, dans laquelle le moyen de maintien comporte une ventouse (51).

3. Machine-outil selon la revendication 1, dans laquelle le moyen de maintien comporte un dispositif choisi parmi : un dispositif magnétique, une courroie autocollante, un dispositif générant des forces de Van der Walls.

4. Machine-outil selon l'une des revendications précédentes, dans laquelle le système de déplacement comporte une chenille (52).

5. Machine-outil selon la revendication 4, dans laquelle la chenille comporte une bande de roulement comportant une pluralité de ventouses.

6. Machine-outil selon l'une quelconque des revendications précédentes, dans laquelle le système de déplacement comporte une roulette motorisée.

7. Machine-outil selon l'une des revendications précédentes, comportant en outre un dispositif de commande (6), arrangé de sorte à synchroniser le mouvement de l'unité (5) au mouvement de la première extrémité du bras transversal (3) le long du rail longitudinal (1).

8. Machine-outil selon la revendication 7, comportant en outre des moyens de détermination des efforts générés par le bras transversal (3) sur le rail longitudinal (1), lesdits moyens de détermination des efforts étant fonctionnellement liés au dispositif de commande (6), et le dispositif de commande (6) étant configuré pour minimiser lesdits efforts.

9. Machine-outil selon l'une des revendications précédentes, dans laquelle l'outil est conformé pour pouvoir se déplacer en translation le long du bras transversal (3).

10. Machine-outil selon l'une des revendications précédentes, dans laquelle le montage en translation entre le bras transversal (3) et le rail longitudinal (1) est réalisé par un module (2) lié rigidement au bras transversal (3) et monté en translation sur le rail longitudinal (1).

11. Machine-outil selon l'une des revendications précédentes, dans laquelle le rail longitudinal est configuré de sorte à être fixé à la pièce (P).

12. Machine-outil selon la revendication 11, dans laquelle le rail longitudinal (1) est flexible, de sorte à pouvoir s'adapter à un rayon de courbure de la pièce.

13. Machine-outil selon la revendication 11 ou la revendication 12, dans laquelle le rail longitudinal (1) comprend des ventouses de fixation (11).

## Patentansprüche

1. Werkzeugmaschine zur Durchführung von Arbeiten an einem Werkstück, umfassend:
- eine Längsschiene (1), die ausgelegt ist, gegenüber dem Werkstück positioniert zu werden;
- einen Querarm (3), orthogonal zur Längsschiene (1), der ein erstes Ende (31) umfasst, das translatorisch an der Längsschiene (1) montiert ist;
- ein Werkzeug, das von dem Querarm getragen wird;
wobei ein zweites Ende (32) des Querarms (3) mit einer Einheit (5) versehen ist, die ein Haltemittel umfasst, welches das Halten der Einheit (5) in Position auf dem Werkstück gestattet,
**dadurch gekennzeichnet, dass** die Einheit (5) motorisiert ist und ein Verschiebungssystem umfasst, um sich auf dem Werkstück, parallel zur Längsschiene (1), zu bewegen.

2. Werkzeugmaschine nach Anspruch 1,
wobei das Haltemittel einen Saugnapf (51) umfasst.

3. Werkzeugmaschine nach Anspruch 1,
wobei das Haltemittel eine Vorrichtung umfasst, die aus folgenden ausgewählt ist: einer magnetischen Vorrichtung, einem selbstklebenden Riemen, einer Vorrichtung, die Van der Walls-Kräfte erzeugt.

4. Werkzeugmaschine nach einem der vorhergehenden Ansprüche,
wobei das Verschiebungssystem eine Raupe (52) umfasst.

5. Werkzeugmaschine nach Anspruch 4,
wobei die Raupe ein Laufband umfasst, das mehrere Saugnäpfe umfasst.

6. Werkzeugmaschine nach einem der vorhergehenden Ansprüche,
wobei das Verschiebungssystem eine motorisierte Rolle umfasst.

7. Werkzeugmaschine nach einem der vorhergehenden Ansprüche,
ferner umfassend eine Steuervorrichtung (6), die derart eingerichtet ist, dass sie die Bewegung der Einheit (5) mit der Bewegung des ersten Endes des Querarms (3) entlang der Längsschiene (1) synchronisiert.

8. Werkzeugmaschine nach Anspruch 7,
ferner umfassend Mittel zur Bestimmung von Kräften, die von dem Querarm (3) auf die Längsschiene (1) ausgeübt werden, wobei die Mittel zur Bestimmung der Kräfte funktionell mit der Steuervorrichtung (6) verbunden sind, und die Steuervorrichtung (6) ausgelegt ist, die Kräfte zu minimieren.

9. Werkzeugmaschine nach einem der vorhergehenden Ansprüche,
wobei das Werkzeug angepasst ist, um sich translatorisch entlang dem Querarm (3) verschieben zu können.

10. Werkzeugmaschine nach einem der vorhergehenden Ansprüche,
wobei die translatorische Montage zwischen dem Querarm (3) und der Längsschiene (1) durch ein Modul (2) durchgeführt wird, das starr mit dem Querarm (3) verbunden ist und translatorisch an der Längsschiene (1) montiert ist.

11. Werkzeugmaschine nach einem der vorhergehenden Ansprüche,
wobei die Längsschiene ausgelegt ist, an dem Werkstück (P) befestigt zu sein.

12. Werkzeugmaschine nach Anspruch 11,
wobei die Längsschiene (1) flexibel ist, um sich an einem Krümmungsradius des Werkstücks anpassen zu können.

13. Werkzeugmaschine nach Anspruch 11 oder Anspruch 12,
wobei die Längsschiene (1) Fixierungssaugnäpfe (11) umfasst.

## Claims

1. A machine tool for carrying out operations on a part comprising:
• a longitudinal (1) rail configured to be positioned relative to the part;
• a transverse arm (3), orthogonal to the longitudinal rail (1), comprising a first end (31) mounted for translational movement on the longitudinal rail (1);
• a tool carried by the transverse arm;
wherein a second end (32) of the transverse arm (3) is provided with a unit (5) comprising a holding means enabling the unit (5) to be held in position on the part,
**characterized in that** the unit (5) is motorized and comprises a travel system for crawling on the part, parallel to the longitudinal rail (1).

2. A machine tool according to claim 1, wherein the holding means comprises a suction cup (51).

3. A machine tool according to claim 1, wherein the holding means comprises a device chosen from: a magnetic device, a self-adhering belt, and a device generating Van der Walls forces.

4. A machine tool according to one of the preceding claims, wherein the travel system comprises a caterpillar track (52).

5. A machine tool according to claim 4, wherein the caterpillar track comprises a tread comprising a plurality of suction cups.

6. A machine tool according to any one of the preceding claims, wherein the travel system comprises a motorized roller.

7. A machine tool according to one of the preceding claims, further comprising a control device (6), arranged so as to synchronize the movement of the unit (5) with the movement of the first end of the transverse arm (3) along the longitudinal rail (1).

8. A machine tool according to claim 7, further comprising means for determining the forces generated by the transverse arm (3) on the longitudinal rail (1), said force determining means being functionally linked to the control device (6), and the control device (6) being configured to minimize said forces.

9. A machine tool according to one of the preceding claims, wherein the tool is configured to be able to move in translation along the transverse arm (3).

10. A machine tool according to one of the preceding claims, wherein the mounting for translational movement between the transverse arm (3) and the longitudinal rail (1) is made by a module (2) rigidly linked to the transverse arm (3) and mounted for translational movement on the longitudinal rail (1).

11. A machine tool according to one of the preceding claims, wherein the longitudinal rail is configured so as to be fastened to the part (P).

12. A machine tool according to claim 11, wherein the longitudinal rail (1) is flexible, so as to be able to adapt to a radius of curvature of the part.

13. A machine tool according to claim 11 or claim 12, wherein the longitudinal rail (1) comprises fastening suction cups (11).
